# EUROPÄISCHE PATENTSCHRIFT

(11) **EP 1 336 468 B1**
(45) Veröffentlichungstag und Bekanntmachung des Hinweises auf die Patenterteilung: **28.12.2005**
(21) Anmeldenummer: 02027465.0
(22) Anmeldetag: 10.12.2002
(51) Int. Cl.: B29D 29/08, F16G 1/28

(54) **Zahnriemen aus Kunststoff und Verfahren und Vorrichtung zum Herstellen eines Zahnriemens**
Plastic toothed belt and method and device for the manufacture of toothed belts
Courroie crantée en plastique et méthode et appareil pour la fabrication de courroies crantées

(30) Priorität: 16.02.2002 DE 10206510
(43) Veröffentlichungstag der Anmeldung: 20.08.2003
(73) Patentinhaber: BRECO Antriebstechnik Breher GmbH & Co., 32457 Porta Westfalica (DE)
(72) Erfinder: Kölling, Rudi, 32602 Vlotho (DE)
(74) Vertreter: Schmidt, Frank-Michael

(56) Entgegenhaltungen:
- EP-A- 1 176 087
- DE-A- 3 527 640
- DE-A- 19 747 173
- US-A- 4 934 992
- US-A- 5 041 063
- US-A1- 2001 044 354

## Beschreibung

Die Erfindung betrifft ein Verfahren und eine Vorrichtung zum Herstellen eines Zahnriemens und richtet sich ferner auf den Zahnriemen selbst.

Zahnriemen finden heutzutage vielfältige Anwendung, sei es zur reinen Kraftübertragung, sei es zu Steuerungszwecken oder auch zum Transport von Werkstücken von einer Bearbeitungsstation zur nächsten. Sie bestehen aus elastoberem Material, vorzugsweise aus Polyurethan, und enthalten eine längslaufende Armierungseinlage, insbesondere in Form von Drahtlitzen, die die Zugfestigkeit und somit die Formstabilität in Längsrichtung erhöhen. Beispiele solcher Zahnriemen sind in den Druckschriften US-A-5041063, US-A-4934992 und US-A-2984120 offenbart.

Bisher war es erforderlich, die Zahnriemen nach ihrer Fertigung aufwendigen Bearbeitungsschritten zu unterziehen, um sie an den jeweiligen Verwendungszweck anzupassen.

Der Erfindung liegt die Aufgabe zugrunde, die Zahnriemenherstellung und -ausbildung derart zu gestalten, daß nachträgliche Bearbeitungsschritte zumindest vereinfacht werden, sofern sie sich nicht völlig erübrigen.

Zur Lösung dieser Aufgabe schafft die Erfindung ein Verfahren, bei dem
- ein Formhohlraum mit Einlaß und Auslaß gebildet wird zwischen einem umlaufenden Formrad, das in seinem Umfang eine von seitlichen Wangen begrenzte, ringförmige Rinne aufweist, und einem endlosen, ebenfalls umlaufenden Formband, das einen Teil des Umfangs des Formrades umschlingt und dort an dessen seitlichen Wangen anliegt, wobei das Formrad im Boden seiner Rinne mit Vertiefungen versehen ist, deren Form der Form der Zähne des Zahnriemens entspricht,
- in den Einlaß des Formhohlraums ein form- und verfestigbarer Kunststoff eingegeben wird und
- stromauf des Einlasses des Formhohlraums in diesen "verlorene Kerne", die sich jeweils mindestens quer über die Breite der Rinne des Formrades von seitlicher Wange zu seitlicher Wange erstrecken, derart in mindestens einige der Vertiefungen des Formrades eingebracht werden, daß sie mindestens über einem Teil ihrer Länge ringsum in den Kunststoff des Zahnriemens eingebettet werden.

Auf diese Weise besteht die Möglichkeit, die Zähne des Zahnriemens in einfacher Weise in Anpassung an den jeweiligen Verwendungszweck zu gestalten. Dies kann mit den bereits vorhandenen Werkzeugen geschehen. Dabei bewirken die "verlorenen Kerne" einen positiven Zusatzeffekt, da sie den Zahnriemen in Querrichtung stabilisieren. Dies vermeidet den sogenannten "Schüsseleffekt", nämlich die konkave Einwölbung der Zahnriemenrückseite, die sich sonst ergeben kann, wenn die gezahnte Vorderseite mit einer Gewebeauflage versehen wird, die das Schrumpfverhalten des Zahnriemenmaterials beeinflußt.

Grundsätzlich besteht die Möglichkeit, jeden Zahn des Zahnriemens mit einem "verlorenen Kern" auszustatten. In der Regel wird es genügen, die "verlorenen Kerne" in gleichmäßiger größerer Teilung über der Länge des Zahnriemens vorzusehen.

Jeder "verlorene Kern" erzeugt im zugehörigen Zahn einen Hohlraum, der in unterschiedlicher Weise genutzt werden kann.

Vorzugsweise werden die "verlorenen Kerne" jeweils als Stab durch einander gegenüberliegende Öffnungen in den seitlichen Wangen des Formrades hindurchgesteckt. Sie erzeugen einen Kanal von vorzugsweise kreisförmigem Querschnitt. Während des Einspritzens des Kunststoffs in den Formhohlraum bleiben sie durch ihren Eingriff in die seitlichen Wangen des Formrades in ihrer Position fixiert.

Als Alternative wird vorgeschlagen, daß die "verlorenen Kerne" in den Formhohlraum eingelegt und jeweils mit mindestens zwei Stegen, die sich über die Höhe des Formhohlraums erstrecken, in den Vertiefungen des Formrades abgestützt werden. Hier besorgen die Stege die Lagefixierung der "verlorenen Kerne", wobei sie den Extrusionsdruck aufnehmen.

Vorteilhafterweise werden die "verlorenen Kerne" jeweils mit mindestens zwei ihrer Stege in die Vertiefungen des Formrades eingepaßt. Dies ergibt eine absolut exakte Positionierung der "verlorenen Kerne".

Ferner ist es vorteilhaft, daß die "verlorenen Kerne" jeweils mit je einem ihrer Stege an die seitlichen Wangen des Formrades angelegt werden. Es entstehen auf diese Weise an den seitlichen Rändern der Zähne Ausnehmungen im Material des Zahnriemens. Außerdem werden die seitlichen Enden der "verlorenen Kerne" abgestützt. Sofern es die dortigen Stege sind, die in die Vertiefungen des Formrades eingepaßt werden, also ihrer Form nach diesen Vertiefungen, nämlich der Zahnform entsprechen, findet die exakte Positionierung der "verlorenen Kerne" an deren seitlichen Enden statt. Bevorzugt wird man mit mindestens einem dritten, im Mittelbereich angeordneten Steg arbeiten, der sich durch einen Bereich des Zahnriemens hindurcherstreckt, in welchem keine Armierungseinlage vorgesehen ist. Dieser mittlere Steg muß nicht zur Lagefixierung des zugehörigen verlorenen Kerns herangezogen werden. Er kann also beliebig konturiert sein, allerdings mit der Maßgabe, daß er sich von der Kopffläche des zugehörigen Zahns bis zur Zahnriemenrückseite erstreckt.

Die Stege der "verlorenen Kerne" stehen vorzugsweise über stabförmige Abschnitte miteinander in Verbindung, wobei diese bevorzugt einen kreisförmigen Querschnitt aufweisen.

In wesentlicher Weiterbildung der Erfindung wird vorgeschlagen, daß die "verlorenen Kerne" aus einem spröden, sich nicht mit dem Kunststoff des Zahnriemens verbindenden Material hergestellt werden. Dies bietet die Möglichkeit, verlorenen Kerne nach Aushärten des Zahnriemens aus diesem zu entnehmen.

Sind die "verlorenen Kerne" stabförmig durch die einander gegenüberliegenden Öffnungen in den seitlichen Wangen des Formrades hindurchgesteckt, entfällt die Notwendigkeit, die Stäbe vor dem Entformen des Zahnriemens in dessen Querrichtung auszustoßen. Vielmehr können die seitlich gelagerten Enden der Stäbe beim Entformen einfach abgebrochen werden. Anschließend läßt sich der Rest der Stäbe ausstoßen, sofern man die dadurch entstehenden Durchgangsöffnungen nutzen will. Geht es hingegen lediglich um die Vermeidung des "Schüsseleffekts", können die Rest-Stäbe im Material des Zahnriemens verbleiben.

Eine Nutzungsmöglichkeit für die Durchgangsöffnungen besteht beispielsweise in der Verankerung von Werkstückträgern, die gegen die zahnfreie Rückseite des Zahnriemens verspannt werden. Dabei können die durch die Durchgangsöffnungen hindurchgehenden Verankerungselemente vorteilhafterweise als Sollbruchstellen ausgebildet werden, die den Zahnriemen vor Überlastung schützen, sofern einer der Werkstückträger bzw. ein sonstiges verankertes Element einer unzulässigen Krafteinwirkung ausgesetzt wird. Auch kann man die Durchgangsöffnungen einseitig verschließen und über Kanäle zur Zahnriemenrückseite hin öffnen. Verbindet man dann das unverschlossene Ende der Durchgangsöffnungen während des Betriebes mit einer Vakuumquelle, kann man auf der Zahnriemenrückseite ggf. über Saugnäpfe eine Saugwirkung erzeugen, die geeignet ist, Werkstücke auf der glatten Zahnriemenfläche festzuhalten.

Sind die "verlorenen Kerne" mit Stegen versehen, so erstrecken sich diese von der Kopffläche der zugehörigen Zähne bis zur Rückseite des Zahnriemens. Aufgrund der Sprödigkeit des Materials genügt es, Kraft auf die Stege auszuüben und damit die Verbindung zu den durchgehenden Körpern der "verlorenen Kerne" zu zerbrechen. Die durchgehenden Körper, bei denen es sich, wie erwähnt, vorzugsweise um Stäbe mit kreisförmigem Querschnitt handelt, können dann quer zum Zahnriemen ausgestoßen werden, sobald die Stege senkrecht zur Querrichtung ausgestoßen worden sind.

Befinden sich die Stege an den seitlichen Enden der "verlorenen Kerne", so bilden sich hier Rücksprünge, vorzugsweise mit dem Profil der Zähne. In diese Rückströme können entsprechende Stege von Befestigungselementen eingreifen, welche beispielsweise zum Transport von Werkstücken dienen. Die Verankerung dieser Befestigungselemente geschieht über eine Durchsteckschraube, die sich durch die von einem der "verlorenen Kerne" erzeugte Durchgangsöffnung hindurcherstreckt.

Auch die mit Stegen versehenen "verlorenen Kerne" können im Material des Zahnriemens verbleiben, beispielsweise um den "Schüsseleffekt" zu vermeiden. Besonders vorteilhaft ist es außerdem, diese "verlorenen Kerne" aus einem Material herzustellen, dessen Gleiteigenschaften besser als die des Kunststoffs des Zahnriemens sind. Beim Schrumpfen des erkaltenden Zahnriemenkunststoffs vermindern sich die Abmaße der "verlorenen Kerne" nicht, so daß die Stege geringfügig aus den Zahnköpfen hervortreten. Da als Material für die "verlorenen Kerne" ein solches gewählt wird, welches bessere Gleiteigenschaften als der Zahnriemenkunststoff besitzt, erhält der Zahnriemen auf seiner gezahnten Seite und ggf. auch an seinen Seitenrändern eine erhöhte Gleitfähigkeit. Ein besonders geeignetes Material hierfür ist beispielsweise Teflon.

In jedem Falle ist es vorteilhaft, die zahnfreie Rückseite des verfestigten Zahnriemens auf Maß zu schleifen. Dies glättet nicht nur die Fläche, sondern sorgt vor allen Dingen dafür, daß die von den "verlornen Kernen" erzeugten, über die Riemenbreite verlaufenden Durchgangsöffnungen einen vorgegebenen Abstand zur Zahnriemenrückseite einhalten. Dies ist für eine exakte Positionierung und Verspannung der mit der Zahnriemenrückseite zu verbindenden Befestigungselemente von wesentlicher Bedeutung. Im übrigen werden die Stege der "verlorenen Kerne" von einer durch Über-Extrusion erzeugten Kunststoffhaut befreit.

Zur Lösung der gestellten Aufgabe schafft die Erfindung ferner eine Vorrichtung zum Herstellen eines Zahnriemens mit
- einem umlaufenden Formrad, das in seinem Umfang eine von seitlichen Wangen begrenzte, ringförmige Rinne aufweist, wobei der Boden der Rinne mit Vertiefungen versehen ist, deren Form der Form der Zähne des Zahnriemens entspricht,
- einem endlosen, ebenfalls umlaufenden Formband, das unter Bildung eines Formhohlraums mit Einlaß und Auslaß einen Teil des Umfangs des Formrades umschlingt und dort an dessen seitlichen Wangen anliegt,
- einer am Einlaß des Formhohlraums angeordneten Kunststoffeinspritzeinrichtung und
- einer stromauf des Einlasses des Formhohlraums angeordneten Einrichtung zum Einbringen von "verlorenen Kernen" in mindestens einige der Vertiefungen des Formrades, wobei die seitlichen Wangen des Formrades einander gegenüberliegende Öffnungen aufweisen und wobei die Einrichtung zum Einbringen von "verlorenen Kernen" eine Steckeinrichtung zum Einstecken je eines stabförmigen "verlorenen Kerns" in zwei einander gegenüberliegende Öffnungen aufweist.

Schließlich schafft die Erfindung zur Lösung der gestellten Aufgabe einen Zahnriemen aus Kunststoff mit einem "verlorenen Kern" in mindestens einem seiner Zähne, wobei der "verlorene Kern" sich über die Breite des Zahnriemens erstreckt, mindestens über einem Teil seiner Länge ringsum in den Kunststoff des Zahnriemens eingebettet ist, und mindestens zwei Stege aufweist, die sich von der Kopffläche des zugehörigen Zahus bis zur Rückseite des Zahrniemens erstrecken.

Der "verlorene Kern" ist vorzugsweise stabförmig ausgebildet, wobei er insbesondere einen runden Querschnitt aufweist.

Zusätzlich ist der "verlorene Kern" vorzugsweise mit mindestens zwei Stegen versehen, die der Zahnform angepaßt sind.

Vorzugsweise weist der "verlorene Kern" an jedem seiner seitlichen Enden einen Steg auf, wobei bevorzugt diese seitlichen Stege an die Zahnform angepaßt sind. Die erzeugten Aussparungen im Material des Zahnriemens entsprechen also in ihrer Form dem Zahnquerschnitt.

Besteht der "verlorene Kern", wie es besonders vorteilhaft ist, aus einem spröden, sich nicht mit dem Kunststoff des Zahnriemens verbindenden Material, so läßt sich der "verlorene Kern" nach Aushärten des Zahnriemenkunststoffs ohne weiteres entfernen, und zwar, sofern er als einfacher Stab ausgebildet ist, unter Hinterlassung einer durchgehenden Öffnung, die zur Unterdruckbeaufschlagung von auf der Zahnriemenrückseite angeordneten Saugnäpfen oder aber auch zur Aufnahme von Verankerungsmitteln für Befestigungselemente dienen kann.

Soll der "verlorene Kern" im fertigen Zahnriemen verbleiben, so besteht er vorzugsweise aus einem Material, dessen Gleiteigenschaften besser als die des Kunststoffs des Zahnriemens sind. Die Stege des "verlorenen Kerns" treten sodann beim Erkalten geringfügig aus den Zahnköpfen und ggf. aus den Seitenrändern des Zahnriemens hervor und können die Gleitfähigkeit des Zahnriemens steigern.

Die zahnfreie Rückseite des Zahnriemens ist vorteilhafterweise auf Maß geschliffen.

In Weiterbeildung der Erfindung ist der Zahnriemen gekennzeichnet durch mindestens ein sich quer über seine zahnfreie Rückseite erstreckendes Befestigungselement, das nach Entfernen des "verlorenen Kerns" mit zwei der Zahnform angepaßten Stegen in die seitlichen Ausnehmungen des zugehörigen Zahns eingreift und von einer durch den Zahn hindurchgehenden, die Stege verbindenden Schraube gehalten wird. Es entsteht eine extrem belastbare und äußert exakte Halterung zum Transport von Werkstücken oder zur Durchführung von Betätigungsfunktionen.

Dabei kann die Schraube bzw. ein andersartiges entsprechendes Verankerungselement als Sollbruchstelle ausgebildet sein, um den Zahnriemen gegen Überlastung zu schützen.

Die Erfindung wird im folgenden anhand bevorzugter Ausführungsbeispiele im Zusammenhang mit der beiliegenden Zeichnung näher erläutert. Die Zeichnung zeigt in:
Figur 1 einen Schnitt durch eine schematische Darstellung einer erfindungsgemäßen Vorrichtung;
Figur 2 eine perspektivische Darstellung eines "verlorenen Kerns";
Figur 3 im Grundriß einen Abschnitt eines Zahnriemens, der unter Verwendung von "verlorenen Kernen" gemäß Figur 2 hergestellt ist;
Figur 4 eine Seitenansicht des Zahnriemens nach Figur 3 mit montiertem Befestigungselement.

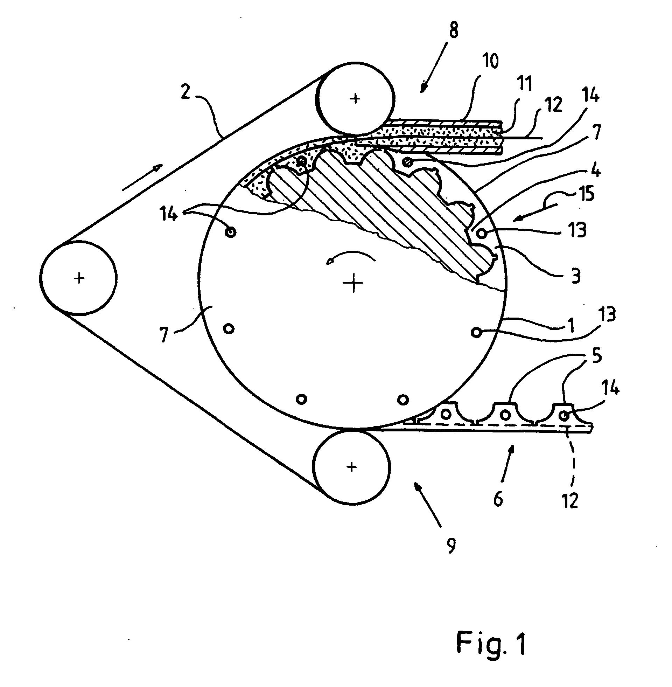

Die Vorrichtung nach Figur 1 weist ein umlaufendes Formrad 1 sowie ein endloses, ebenfalls umlaufendes Formband 2 auf, wobei das Formband 2 einen Teil des Umfangs des Formrades 1 umschlingt. Im Umfang des Formrades 1 ist eine ringförmige Rinne 3 ausgebildet, deren Boden mit Vertiefungen 4 versehen ist. Die Form der Vertiefungen 4 ist an die Form der Zähne 5 eines herzustellenden Zahnriemens 6 angepaßt. Die Rinne 3 wird von seitlichen Wangen 7 begrenzt, auf denen das Formband 2 im Umschlingungsbereich aufliegt. In diesem Umschlingungsbereich wird also von dem Formrad 1 und dem Formband 2 ein Formhohlraum gebildet, der einen Einlaß 8 und einen Auslaß 9 aufweist.

Am Einlaß 8 des Formhohlraums ist ein Extruder 10 vorgesehen, der Polyurethan 11 in den Formhohlraum einspritzt. Gleichzeitig läuft an dieser Stelle eine Armierungseinlage 12 in den Formhohlraum ein.

Die seitlichen Wangen 7 des Formrades 1 sind mit einander gegenüberliegenden Öffnungen 13 versehen. Dabei ist die Verteilung so getroffen, daß jedem zweiten Zahn 5 des fertigen Zahnriemens 6, also jeder zweiten Vertiefung 4 des Formrades 1, ein Paar von Öffnungen 13 zugeordnet ist. Selbstverständlich sind andere Zuordnungen gleichermaßen möglich.

An einer Stelle stromauf des Einlasses 8 des Formhohlraums werden stabförmige "verlorene Kerne" 14 von der Seite her jeweils in ein Paar von einander gegenüberliegenden Öffnungen 13 eingesteckt. Hierzu dient eine nicht dargestellte Steckeinrichtung. Die "verlorenen Kerne" 14 überbrücken den Formhohlraum und werden im Zuge des Formvorgangs vollständig in das Polyurethan 11 eingebettet. Sie bestehen aus einem spröden Werkstoff, der sich nicht mit dem Polyurethan verbindet. Beim Endformen des Zahnriemens 6, also am Auslaß 9 des Formhohlraums, werden die seitlich in den Wangen 7 befindlichen Abschnitte der "verlorenen Kerne" 14 abgebrochen, woraufhin letztere seitlich aus den Zähnen 5 herausgestoßen werden können. Es entstehen also, ohne daß zusätzliche Bearbeitungsschritte erforderlich wären, Durchgangsöffnungen, die sich quer durch die Zähne 5 hindurcherstrecken und zum Anschluß an eine Vakuumquelle oder zur Aufnahme von Befestigungsmitteln für auf der Rückseite des Zahnriemens 6 anzuordnende Befestigungselemente dienen.

Anstelle der Steckeinrichtung kann auch eine Einlegeeinrichtung 15 vorgesehen werden, die in Figur 1 schematisch durch einen Pfeil angedeutet ist. Die Einlegeeinrichtung dient dazu, anders ausgebildete "verlorene Kerne" 16 radial in die Ausnehmungen 4 des Formrades 1 einzulegen.

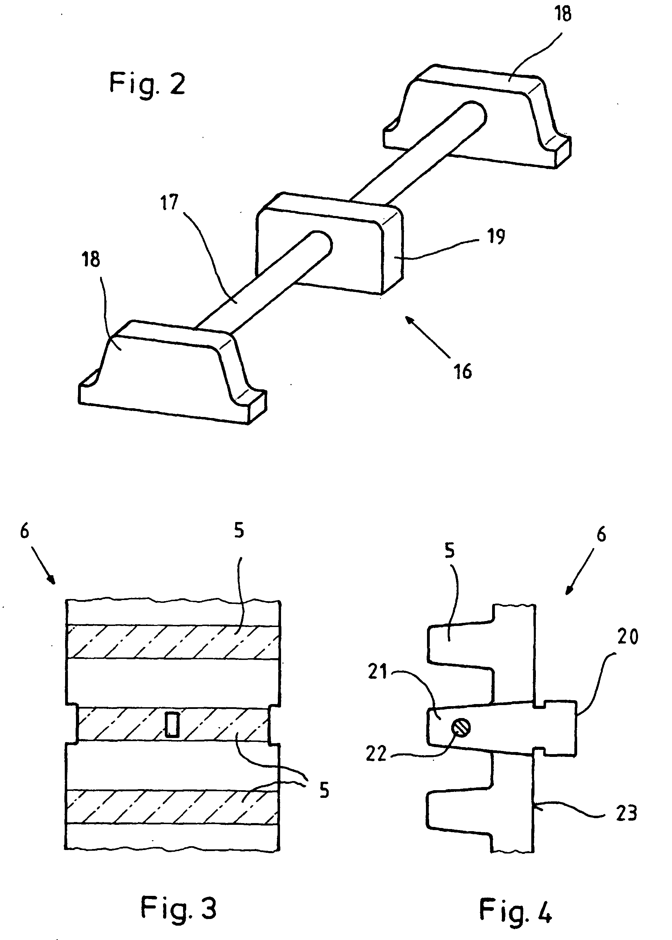

Einer dieser "verlorenen Kerne" 16 ist in Figur 2 dargestellt. Er weist einen stabförmigen Körper 17 auf, der mit zwei seitlichen Stegen 18 und einem zentralen Steg 19 versehen ist. Alle Stege 18, 19 erstrecken sich über die volle Höhe des Formhohlraums, wobei sie im fertigen Zahnriemen 6 einerseits von der Fläche der Zahnköpfe und andererseits von der Fläche der Zahnriemenrückseite aus zugänglich sind.

Auch die "verlorenen Kerne" 16 bestehen aus sprödem Material, welches sich nicht mit dem Polyurethan des Zahnriemens verbindet. Durch Krafteinwirkung auf den zentralen Steg 19 kann dessen beidseitige Verbindung mit dem Zentralkörper 17 zerbrochen werden, woraufhin sich der gesamte "verlorene Kern" 16 aus dem zugehörigen Zahn 5 des Zahnriemens 6 entnehmen läßt.

Die "verlorenen Kerne" 16 können auch im Zahnriemen 6 verbleiben. Sie bestehen dann beispielsweise aus Teflon, dessen Gleiteigenschaften besser als die des Polyurethan sind. Nach dem Erkalten bilden die Stege 18, 19 Gleitelemente auf der gezahnten Seite und an den Seitenrändern des Zahnriemens 6.

Wie aus Figur 2 deutlich zu ersehen, ist die Form der seitlichen Stege 18 an die Form der Zähne 5 des Zahnriemens 6 angepaßt. Beim Einlegen des "verlorenen Kerns" 16 sorgen die Stege 18 also für eine sehr exakte Positionierung. Außerdem erzeugen sie in den Flanken des Zahnriemens entsprechende Ausnehmungen, wie dies deutlich aus Figur 3 hervorgeht.

In Figur 3 sind die Kopfflächen der Zähne 5 aus Gründen der Übersichtlichkeit strichpunktiert dargestellt. Figur 3 zeigt den Zahnriemen 6 nach der Entnahme des dem mittleren Zahn 5 zugeordneten "verlorenen Kerns" 16.

Figur 4 zeigt eine Seitenansicht des Zahnriemens 6 nach Figur 3, und zwar nach Anbringung eines Befestigungselements 20, welches die Möglichkeit bietet, Werkstückträger auf der Rückseite des Zahnriemens 6 zu befestigen. Das Befestigungselement 20 weist beidseitige Stege 21 auf, die in diejenigen Ausnehmungen eingreifen, die von den Stegen 18 des "verlorenen Kerns" 16 erzeugt worden sind. Die Form der Stege 21 ist an die Form der Zähne 5 des Zahnriemens 6 angepaßt. Die beiden Stege 21 des Befestigungselements 20 sind durch eine Schraube 22 miteinander verbunden. Ersichtlich wird das Befestigungselement 20 auf diese Weise sehr sicher gehalten und außerdem sehr exakt fixiert, zumal der Zahnriemen 6 auf seiner rückseitigen Fläche 23 auf Maß geschliffen worden ist. Die Schraube 22 bildet eine Sollbruchstelle.

Im Rahmen der Erfindung sind durchaus Abwandlungsmöglichkeiten gegeben. So kann auch ein einfacher stabförmiger "verlorener Kern" im Zahnriemen verbleiben, um dem "Schüsseleffekt" entgegenzuwirken. Außerdem können die "verlorenen Kerne" anders konfiguriert sein, als es in den Zeichnungen dargestellt ist. Die Erfindung ist anwendbar auch auf solche Zahnriemen, bei denen sich die Zähne nicht über die gesamte Breite des Zahnriemens erstrecken oder in Abschnitte unterteilt sind, die unter Bildung von Lücken gegeneinander versetzt sind. Das Material der "verlorenen Kerne" wird in Abhängigkeit von den gewünschten Eigenschaften ausgewählt. Sollen die "verlorenen Kerne" entnommen werden, darf das Material keine Verbindung mit dem elastomeren Material des Zahnriemens eingehen.

Als Material für "verlorene Kerne", die nicht im Zahnriemen verbleiben sollen, eignen sich insbesondere Polyester-Spritzmassen, da sie die erforderliche Sprödigkeit und Wärmebeständigkeit aufweisen. Bevorzugt wird ein unter der Bezeichnung PBTP bekanntes Material verwendet, das einen Anteil an Mineralstoffen von 25 % aufweist.

## Patentansprüche

1. Verfahren zum Herstellen eines Zahnriemens (5), wobei
- ein Formhohlraum mit Einlaß (8) und Auslaß (9) gebildet wird zwischen einem umlaufenden Formrad (1), das in seinem Umfang eine von seitlichen Wangen (7) begrenzte, ringförmige Rinne (3) aufweist, und einem endlosen, ebenfalls umlaufenden Formband (2), das einen Teil des Umfangs des Formrades (1) umschlingt und dort an dessen seitlichen Wangen (7) anliegt, wobei das Formrad (1) im Boden seiner Rinne (3) mit Vertiefungen (4) versehen ist, deren Form der Form der Zähne (5) des Zahnriemens (6) entspricht,
- in den Einlaß (8) des Formhohlraums ein form- und verfestigbarer Kunststoff (11) eingegeben wird und
stromauf des Einlasses (8) des Formhohlraums in die Rinne (3) des Formrades (1) "verlorene Kerne" (14, 16), die sich jeweils quer über die Breite der Rinne (3) von seitlicher Wange (7) zu seitlicher Wange (7) erstrecken, derart in mindestens einige der Vertiefungen (4) des Formrades (1) eingebracht werden, daß sie mindestens über einem Teil ihrer Länge ringsum in den Kunststoff (11) des Zahnriemens (6) eingebettet werden.

2. Verfahren nach Anspruch 1, **dadurch gekennzeichnet, daß** die "verlorenen Kerne" (14) jeweils als Stab durch einander gegenüberliegende Öffnungen (13) in den seitlichen Wangen (7) des Formrades (1) hindurchgesteckt werden.

3. Verfahren nach Anspruch 1, **dadurch gekennzeichnet, daß** die verlorenen Kerne (16) in den Formhohlraum eingelegt und jeweils mit mindestens zwei Stegen (18, 19), die sich über die Höhe des Formhohlraums erstrecken, in den Vertiefungen (4) des Formrades (1) abgestützt werden.

4. Verfahren nach Anspruch 3, **dadurch gekennzeichnet, daß** die "verlorenen Kerne" jeweils mit je einem ihrer Stege (18) an die seitlichen Wangen (7) des Formrades (1) angelegt werden.

5. Verfahren nach einem der Ansprüche 1 bis 4, **dadurch gekennzeichnet, daß** die "verlorenen Kerne" (14,16) aus einem spröden, sich nicht mit dem Kunststoff (11) des Zahnriemens (6) verbindenden Material hergestellt werden.

6. Vorrichtung zum Herstellen eines Zahnriemens (6) mit
- einem umlaufenden Formrad (1), das in seinem Umfang eine von seitlichen Wangen (7) begrenzte, ringförmige Rinne (3) aufweist, wobei der Boden der Rinne (3) mit Vertiefungen (4) versehen ist, deren Form der Form der Zähne (5) des Zahnriemens (6) entspricht,
- einem endlosen, ebenfalls umlaufenden Formband (2), das unter Bildung eines Formhohlraums mit Einlaß (8) und Auslaß (9) einen Teil des Umfangs des Formrades (1) umschlingt und dort an dessen seitlichen Wangen (7) anliegt,
- einer am Einlaß (8) des Formhohlraums angeordneten Kunststoffeinspritzeinrichtung (10) und
- einer stromauf des Einlasses des Formhohlraums angeordneten Einrichtung zum Einbringen von "verlorenen Kernen" (14, 16) in mindestens einige der Vertiefungen (4) des Formrades (1),
wobei die seitlichen Wangen (7) des Formrades (1) einander gegenüberliegende Öffnungen (13) aufweisen und wobei die Einrichtung zum Einbringen von "verlorenen Kernen" (14) eine Steckeinrichtung zum Einstecken je eines stabförmigen "verlorenen Kerns" (14) in zwei einander gegenüberliegende Öffnungen (13) aufweist.

7. Zahnriemen (6) aus Kunststoff mit einem "verlorenen Kern" (14, 16) in mindestens einem seiner Zähne (5), wobei der "verlorene Kern" (14, 16) sich über die Breite des Zahnriemens (6) erstreckt, mindestens über einem Teil seiner Länge ringsum in dem Kunststoff (11) des Zahnriemens (6) eingebettet ist und mindestens zwei Stege (18, 19) aufweist, die sich von der Kopffläche des zugehörigen Zahns (5) bis zur Rückseite des Zahnriemens (6) erstrecken.

8. Zahnriemen nach Anspruch 7, **dadurch gekennzeichnet, daß** mindestens zwei der Stege (18, 19) der Zahnform angepaßt sind.

9. Zahnriemen nach Anspruch 7 oder 8, **gekennzeichnet durch** mindestens ein sich quer über seine zahnfreie Rückseite erstreckendes Befestigungselement (20), das nach Entfernen des "verlorenen Kerns" (16) mit zwei der Zahnform angepaßten Stegen (21) in die seitlichen Ausnehmungen des zugehörigen Zahns (5) eingreift und von einer **durch** den Zahn hindurchgehenden, die Stege (21) verbindenden Schraube (22) gehalten wird.

## Claims

1. Method of manufacturing a toothed belt (5) wherein
- a moulding cavity with an inlet (8) and an outlet (9) is defined between a rotating moulding wheel (1), which has in its periphery an annular channel (3), which is defined by lateral cheeks (7) and an endless moulding belt (2), which also rotates and surrounds a proportion of the periphery of the moulding wheel (1) and engages its lateral cheeks (7) at that point, the moulding wheel (1) being provided in the base of its channel (3) with recesses (4), the shape of which corresponds to the shape of the teeth (5) of the toothed belt (6),
- a mouldable and solidifiable plastic material (11) is introduced into the inlet (8) of the moulding cavity and "lost cores" (14, 16) which extend transversely over the width of the channel (3) from lateral cheek (7) to lateral cheek (7), are introduced upstream of the inlet (8) of the moulding cavity into the channel (3) in the moulding wheel (1) such that, in at least some of the recesses (4) in the moulding wheel (1), they are embedded all around in the plastic material (11) of the toothed belt (6) over at least a proportion of their length.

2. Method as claimed in Claim 1, **characterised in that** the "lost cores" (14) are inserted in the form of rods through openings (13) opposite to one another in the lateral cheeks (7) of the moulding wheel (1).

3. Method as claimed in Claim 1, **characterised in that** the lost cores (16) are inserted into the moulding cavity and are supported in the recesses (4) in the moulding wheel (1) with at least two respective webs (18, 19), which extend over the height of the moulding cavity.

4. Method as claimed in Claim 3, wherein the "lost cores" are positioned with a respective one of their webs (18) against the lateral cheeks (7) of the moulding wheel (1).

5. Method as claimed in one of claims 1 to 4, **characterised in that** the "lost cores" (14, 16) are manufactured from a brittle material, which does not bond with the plastic material (11) of the toothed belt (6).

6. Apparatus for manufacturing a toothed belt (6) including
- a rotating moulding wheel (1), which, in its periphery, has an annular channel (3), which is defined by lateral cheeks (7), the base of the channel (3) being provided with recesses (4), the shape of which corresponds to the shape of the teeth (5) of the toothed belt (6),
- an endless moulding belt (2), which also rotates and surrounds a proportion of the periphery of the moulding wheel (1) to define a moulding cavity with an inlet (8) and an outlet (9) and at that point engages its lateral cheeks (7),
- a plastic material injection device arranged at the inlet of the moulding cavity and
- a device arranged upstream of the inlet of the moulding cavity for introducing "lost cores" (14, 16) into at least some of the recesses (4) in the moulding wheel (1), wherein lateral cheeks (7) of the moulding wheel (1) have openings (13) opposite to one another and wherein the device for introducing "lost cores" (14) has an insertion device for inserting a respective rod-shaped "lost core" (14) into two opposite openings (13).

7. Toothed belt (6) of plastics material with a "lost core" (14, 16) in at least one of its teeth (5), wherein the "lost core" (14, 16) extends over the breadth of the toothed belt (6) is embedded all around in the plastic material (11) of the toothed belt (6) over at least a proportion of its length and has at least two webs (18, 19), which extend from the crown surface of the associated tooth (5) to the rear surface of the toothed belt (6).

8. Toothed belt as claimed in Claim 7, **characterised in that** at least two of the webs (18, 19) are matched to the tooth shape.

9. Toothed belt as claimed in Claim 7 or 8, **characterised by** at least one fastening element (20), which extends transversely over its untoothed rear side and, after removal of the "lost core" (16), engages in the lateral openings in the associated tooth with two webs (21) matched to the tooth shape and is held by a screw (22), which passes through the tooth and connects the webs (21).

## Revendications

1. Procédé de fabrication d'une courroie dentée (5), dans lequel :
- une empreinte avec entrée (8) et sortie (9) est formée entre une roue moulée rotative (1), qui présente, à sa périphérie, une gorge annulaire (3) limitée par des joues latérales (7), et une bande moulée (2) sans fin également rotative, qui embrasse une partie de la périphérie de la roue moulée (1) et est appliquée à cet endroit contre les joues latérales (7) de celle-ci, la roue moulée (1) étant munie, sur le fond de sa gorge (3) de cavités (4) dont la forme correspond à la forme des dents (5) de la courroie dentée (6),
- une matière plastique moulable et durcissable est versée dans l'entrée (8) de l'empreinte et
en amont de l'entrée (8) de l'empreinte, dans la gorge (3) de la roue moulée (1), des "noyaux perdus" (14, 16), qui s'étendent transversalement à la joue latérale (7) sur la largeur de la gorge (3) de la joue latérale (7), sont introduits dans au moins quelques cavités (4) de la roue moulée (1) de manière à être noyés, au moins sur une partie de leur longueur, de tous côtés dans la matière plastique (11) de la courroie dentée (6).

2. Procédé selon la revendication 1, **caractérisé en ce que** les "noyaux perdus" (14) sont introduits, chacun en tant que barreau, à travers des ouvertures (13) se faisant face dans les joues latérales (7) de la roue moulée (1).

3. Procédé selon la revendication 1, **caractérisé en ce que** les noyaux perdus (16) sont placés dans l'empreinte et sont soutenus chacun par au moins deux entretoises (18, 19) qui s'étendent sur la hauteur de l'empreinte, dans les cavités (4) de la roue moulée (1).

4. Procédé selon la revendication 3, **caractérisé en ce que** 'les noyaux perdus' sont appliqués, chacun avec l'une de leurs entretoises (18), contre les joues latérales (7) de la roue moulée (1).

5. Procédé selon l'une quelconque des revendications 1 à 4, **caractérisé en ce que** les "noyaux perdus" (14, 16) sont fabriqués à partir d'une matière cassante, qui ne se lie pas à la matière plastique (11) de la courroie dentée (6).

6. Dispositif de fabrication d'une courroie dentée (6) comportant
- une roue moulée (1) rotative qui présente, sur sa périphérie, une gorge annulaire (3) limitée par des joues latérales (7), le fond de la gorge (3) étant muni de cavités (4) dont la forme correspond à la forme des dents (5) de la courroie dentée (6),
- une bande moulée (2) sans fin également rotative (2) qui embrasse, en formant une empreinte avec entrée (8) et sortie (9), une partie de la périphérie de la roue moulée (1), et est appliquée à cet endroit contre les joues latérales (7) de celle-ci,
- un dispositif d'injection de matière plastique (10) disposé à l'entrée (8) de l'empreinte et
- un dispositif, disposé en amont de l'entrée de l'empreinte, pour l'introduction de "noyaux perdus" (14, 16) dans au moins quelques-unes des cavités (4) de la roue moulée (1),
les joues latérales (7) de la roue moulée (1) présentant des ouvertures (13) se faisant face et le dispositif d'introduction de "noyaux perdus" (14) présentant un dispositif d'insertion pour l'insertion d'un "noyau perdu" (14) en forme de barreau dans chacune des deux ouvertures (13) se faisant face.

7. Courroie dentée (6) en matière plastique comportant un "noyau perdu" (14, 16) dans au moins l'une de ses dents (5), le "noyau perdu" (14, 16) s'étendant sur la largeur de la courroie dentée (6), étant noyé de tous côtés dans la matière plastique (11) de la courroie dentée (6) sur au moins une partie de sa longueur et présentant au moins deux entretoises (18, 19) qui s'étendent de la face de la dent (5) correspondante jusqu'à l'arrière de la courroie dentée (6).

8. Courroie dentée selon la revendication 7, **caractérisée en ce qu'**au moins deux des entretoises (18, 19) sont adaptées à la forme de la dent.

9. Courroie dentée selon la revendication 7 ou 8, **caractérisée par** au moins un élément de fixation (20) s'étendant transversalement sur son côté arrière sans dent, élément qui, après le retrait du "noyau perdu" (16) entre en prise dans les évidements latéraux de la dent correspondante (5) avec deux des entretoises (21) adaptées à la forme de la dent et qui est maintenu par une vis traversant la dent, reliant les entretoises (21).
